# DEMANDE DE BREVET EUROPEEN

(11) **EP 2 138 219 A1**
(43) Date de publication de la demande: **30.12.2009**
(21) Numéro de dépôt: 08305319.9
(22) Date de dépôt: 24.06.2008
(51) Int. Cl.: B01D 29/15, B01D 29/64, B01D 29/68

(54) **DISPOSITIF DE FILTRE IMMERGE POUR FILTRAGE DE L'EAU.**

(71) Demandeur: Walter, Gilbert M., 67240 Bischwiller (FR); Claus, Pascal M., 67500 Haguenau (FR)
(72) Inventeur: Walter, Gilbert M., 67240 Bischwiller (FR); Claus, Pascal M., 67500 Haguenau (FR)
(74) Mandataire: Rhein, Alain

(57) **Abrégé**

Dispositif de filtre immergé pour filtrage de l'eau comportant un châssis (2) recouvert d'une membrane filtrante (3) et une pompe (P) d'aspiration de l'eau au travers de la membrane filtrante (3).

I1 comporte en combinaison :
- au moins une buse de nettoyage (4), disposée extérieurement au châssis (2) recouvert de la membrane filtrante (3), conçue apte à projeter un flux d'eau de nettoyage orienté en direction de la membrane filtrante (3) pour écarter de cette dernière les particules à filtrer, et
- au moins une buse de décolmatage (6), disposée intérieurement au châssis (2) recouvert de la membrane filtrante (3), conçue apte à projeter un flux d'eau de décolmatage orienté en direction de la membrane filtrante (3) pour décolmater de cette dernière les particules incrustées.

## Description

L'invention concerne un dispositif de filtre immergé pour filtrage de l'eau de plans ou courants d'eau naturels.

L'invention concerne le domaine de la filtration de l'eau de plans ou courants d'eau naturels.

De plus en plus d'aménagements adaptés à la baignade sont mis en place sur les sites naturels formés par les plans ou courants d'eau. Ces aménagements, de type bassins flottants immergés partiellement dans les plans ou courants d'eau, présentent l'avantage de nécessiter moins d'investissements de la part des municipalités que les piscines publiques, tout en permettant à un large public l'accès à des activités de baignade sécurisées.

L'eau employée dans ces bassins flottants est celle du plan ou courant d'eau dans lequel ils sont installés, l'eau étant au besoin amenée dans les bassins flottants via des pompes.

Bien que non nocive et ainsi bonne pour la baignade, un des inconvénients de l'eau des plans ou courants d'eau naturels est son aspect trouble dû à des particules en suspension.

Cet aspect est gênant d'un point de vue visuel pour les usagers. De plus, malgré un continuel renouvellement de l'eau, les dépôts que ces particules peuvent laisser sur les parois internes des aménagements de type bassins flottants nécessitent un nettoyage fréquent de ces derniers.

On observera qu'il est connu, par le document DE 197 57 108 un dispositif de filtre pourvu d'un élément filtrant en forme de cylindre et d'un dispositif de rétro-lavage comprenant une pluralité de buses réparties sur une rampe à l'intérieur et une pluralité de buses réparties sur une rampe à l'extérieur de cet élément filtrant. Ce dispositif de rétro-lavage n'est destiné à fonctionner qu'au-delà d'un degré de saturation défini dudit filtre. Ainsi, il est expliqué dans ce document que lorsque le filtre vient à se saturer, l'eau a tendance à stagner dans l'espace annulaire séparant une virole intermédiaire et ledit filtre cylindrique.

Ainsi, dans une conception selon cet état de la technique, il n'est pas envisagé ni suggérer d'assurer un rétro-lavage du filtre alors que celui-ci est en fonctionnement. Ceci signifie qu'en cours de nettoyage ou rétro-lavage, le dispositif ne peut filtrer l'eau. Surtout, dans un milieu à teneur en particules en suspension élevé, le filtre a tendance à se saturer très vite et c'est très fréquemment qu'il faut arrêter le filtrage de l'eau au profit du rétro-lavage. Il s'en suit un renouvellement insuffisant en eau filtrée du bassin. De plus, sous l'effet de l'eau aspirée les particules retenues ont tendance à s'incruster dans la membrane filtrante rendant son décolmatage plus difficile, dans tous les cas nécessitant un flux d'eau de décolmatage puissant.

Afin de pallier ces inconvénients, l'invention concerne un dispositif de filtre immergé pour filtrage de l'eau comportant un châssis recouvert d'une membrane filtrante et une pompe d'aspiration de l'eau au travers de la membrane filtrante caractérisé par le fait qu'il comporte en combinaison :
- au moins une buse de nettoyage, disposée extérieurement au châssis recouvert de la membrane filtrante, conçue apte à projeter un flux d'eau de nettoyage orienté en direction de la membrane filtrante pour écarter de cette dernière les particules à filtrer,
- au moins une buse de décolmatage, disposée intérieurement au châssis recouvert de la membrane filtrante, conçue apte à projeter un flux d'eau de décolmatage orienté en direction de la membrane filtrante pour décolmater de cette dernière les particules incrustées ;
- et des moyens pour alimenter en eau la ou les buses de nettoyage et/ou la ou les buses de décolmatage en cours de filtration.

Selon une particularité de l'invention, le flux d'eau provenant de la buse de nettoyage affleure la membrane filtrante et le flux d'eau provenant de la buse de décolmatage s'étend de manière essentiellement perpendiculaire au travers de la membrane filtrante.

Avantageusement, le châssis est de forme cylindrique avec la membrane filtrante définissant sa périphérie. Dans ce cas, le flux d'eau provenant de la buse de nettoyage s'étend de manière tangentielle par rapport à la membrane filtrante.

Le dispositif peut comporter en plus des moyens de commande du déplacement de la membrane filtrante au-devant des flux de nettoyage et de décolmatage.

Avantageusement ces moyens de commande du déplacement de la membrane filtrante sont constitués par des moyens d'entraînement en rotation du châssis associé à la membrane filtrante.

Le flux d'eau provenant de la buse de nettoyage peut-être orienté dans la même direction que la vitesse tangentielle au châssis ou à contre sens par rapport à la vitesse tangentielle au châssis.

Le dispositif peut encore comporter une pluralité de buses réparties sur une rampe et/ou une pluralité de rampes.

En retenant les particules indésirables, le dispositif selon l'invention permet avantageusement de clarifier l'eau, pour le plus grand confort des usagers de bassins flottants installés sur les plans ou courants d'eau naturels.

Avantageusement, il est totalement écologique car sans apport de substances chimiques pour remédier au problème des particules en suspension.

De plus, son système d'auto-nettoyage limite les opérations de maintenance à réaliser pour le maintenir propre.

La présente invention sera mieux comprise à la lecture de la description qui va suivre se rapportant à un exemple de réalisation.

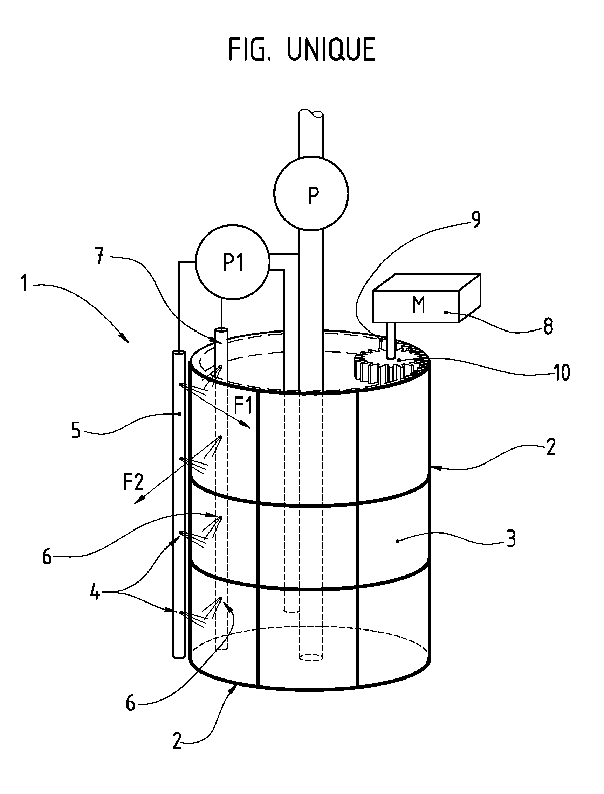

La compréhension de cette description sera facilitée en se référant au dessin ci-joint, représentant de manière schématisée et en élévation un tel dispositif de filtre immergé selon l'invention.

Tel que visible sur la planche unique de dessin jointe, la présente invention concerne le domaine de la filtration de l'eau de plans ou courants d'eau naturels et a trait, plus particulièrement, à un dispositif de filtre immergé 1, destiné à être disposé dans un plan ou courant d'eau naturel. Ce filtre 1 comporte un châssis 2 recouvert d'une membrane filtrante 3.

Une pompe d'aspiration P est conçue apte à filtrer au travers de la membrane filtrante 3 l'eau du plan ou courant d'eau naturel. En particulier, cette pompe P peut être logée dans le filtre 1 ou déportée par rapport au filtre 1.

La membrane filtrante 3 est une membrane présentant une finesse de filtration allant de 25µm à 100µm, de préférence de 25µm à 50µm. L'homme du métier pourra sans mal ajuster la finesse de filtration selon la taille des particules à retenir.

Le filtre 1 possède au moins une, en l'occurrence une pluralité de buses de nettoyage 4, disposées extérieurement au châssis 2 et à la membrane filtrante 3 sur une rampe 5, conçues apte à projeter des flux d'eau de nettoyage en direction de la membrane filtrante 3. La flèche F₁ représente une direction et un sens préférentiels de ce flux d'eau. Ainsi, celui-ci est orienté avantageusement de manière à affleurer la membrane filtrante 3.

Le filtre 1 possède encore au moins une, en l'occurrence une pluralité de buses de décolmatage 6, disposées intérieurement au châssis 2 et à la membrane filtrante 3 sur une rampe 7, conçues apte à projeter des flux d'eau de décolmatage. La flèche F₂ représente, là encore, une direction et un sens préférentiels de ce flux d'eau de décolmatage. Ainsi, ce fluxw d'eau est avantageusement dirigé perpendiculairement au travers de la membrane filtrante 3.

Les buses 4 et 6 peuvent être alimentées en eau par des moyens qui leur sont propre, en l'occurrence une pompe P₁, venant récupérer l'eau du plan ou courant d'eau naturel.

I1 va de soi que l'homme du métier pourra aisément envisager une pompe unique, en l'occurrence la pompe d'aspiration et de filtration P, les buses 4 et 6 étant alors alimentées en eau par un système de dérivation émanant de cette pompe unique.

Dans tous les cas, selon l'invention, ces moyens d'alimentation en eau des buses de nettoyage 4 et/ou des buses de décolmatage 6 sont conçu apte à fonctionner et à alimenter ces buses 4 et/ou 6 en cours de filtration, c'est-à-dire sans que, pendant cette opération de nettoyage de la membrane filtrante 3, il ne soit nécessaire d'arrêter la filtration de l'eau elle-même, par exemple en stoppant la pompe de P.

Grâce aux flux de nettoyage F₁, les particules retenues au niveau de la surface de la membrane filtrante 3 suite à l'aspiration de l'eau par la pompe P sont écartées de la membrane filtrante 3, de manière à assurer un auto-nettoyage de cette denrière.

Grâce aux flux de décolmatage F₂, les particules non écartées par les flux de nettoyage sont décolmatées de la membrane filtrante 3, assurant un auto-nettoyage performant de cette dernière.

On voit bien sur la figure jointe que les flux d'eau provenant des buses de nettoyage 4 affleurent la membrane filtrante 3 et les flux d'eau provenant des buses de décolmatage s'étendent de manière essentiellement perpendiculaire au travers de la membrane filtrante 3.

Comme illustré sur la figure unique, le châssis 2 est avantageusement cylindrique, et les flux d'eau provenant des buses de nettoyage s'étendent de manière tangentielle par rapport à la membrane filtrante, comme illustré par la flèche F₁.

Le filtre 1 comporte encore des moyens de commande du déplacement de la membrane filtrante 3 au-devant des flux de nettoyage et de décolmatage. Ceux-ci sont constitués par moyens d'entraînement en rotation du châssis 2 recouvert de la membrane filtrante 3, en l'occurrence un motoréducteur 8 entraînant le châssis 2 en rotation via un dispositif de transmission quelconque, par exemple une couronne 9 à crémaillère et un pignon 10, comme illustré sur la planche unique. De tels moyens de transmission peuvent encore emprunter la forme d'une courroie s'enroulant autour, d'une part, du châssis cylindrique 2 et, d'autre part, d'une poulie d'entrainement couplée au moteur ou motoréducteur 8.

De cette manière, un maximum de surface de la membrane filtrante 3 peut être nettoyé par les flux d'eau.

Le sens de rotation du châssis 2 pourra être identique à la direction des flux d'eau provenant des buses de nettoyage 4 ou de direction inverse, c'est-à-dire à contre sens.

Si l'exemple non limitatif présenté comporte une pluralité de buses 4 et 6 réparties sur deux rampes 5 et 7, l'homme du métier pourra tout aussi bien concevoir une pluralité de rampes additionnelles multipliant les effets de buses supplémentaires par leur positionnement à différents endroits du châssis 2.

De manière économique, l'homme du métier pourra tout aussi bien concevoir une unique buse de nettoyage 4 associée à une buse de décolmatage 6.

Tel qu'il ressort de la description qui précède, la présente invention vient répondre au problème de la clarification de l'eau de plans ou courants d'eau naturels pour son utilisation dans des aménagements de type bassins flottants. En outre, sa maintenance est limitée grâce à des flux d'eau d'auto-nettoyage intégrés.

## Revendications

1. Dispositif de filtre 1 immergé pour filtrage de l'eau comportant un châssis (2) recouvert d'une membrane filtrante (3) et une pompe d'aspiration (P) de l'eau au travers de la membrane filtrante (3) **caractérisé par le fait qu'**il comporte en combinaison :
- au moins une buse de nettoyage (4), disposée extérieurement au châssis (2) recouvert de la membrane filtrante (3), conçue apte à projeter un flux d'eau de nettoyage orienté en direction de la membrane filtrante (3) pour écarter de cette dernière les particules à filtrer,
- au moins une buse de décolmatage (6), disposée intérieurement au châssis (2) recouvert de la membrane filtrante (3), conçue apte à projeter un flux d'eau de décolmatage orienté en direction de la membrane filtrante (3) pour décolmater de cette dernière les particules incrustées ;
- et des moyens pour alimenter en eau la ou les buses de nettoyage (4) et/ou la ou les buses de décolmatage (6) en cours de filtration.

2. Dispositif de filtre (1) immergé pour filtrage de l'eau selon la revendication 1, **caractérisé par le fait que** le flux d'eau provenant de la buse de nettoyage (4) affleure la membrane filtrante (3) et le flux d'eau provenant de la buse de décolmatage (6) s'étend de manière essentiellement perpendiculaire au travers de la membrane filtrante (3).

3. Dispositif de filtre (1) immergé pour filtrage de l'eau selon l'une des revendications 1 ou 2, **caractérisé en ce que** le châssis (2) est de forme cylindrique avec la membrane filtrante (3) définissant sa périphérie.

4. Dispositif de filtre (1) immergé pour filtrage de l'eau selon la revendication 3, **caractérisé en ce que** le flux d'eau provenant de la buse de nettoyage (4) s'étend de manière tangentielle par rapport à la membrane filtrante (3).

5. Dispositif de filtre (1) immergé pour filtrage de l'eau selon l'une des revendications 1 à 4, **caractérisé en ce qu'**il comporte en plus des moyens de commande du déplacement de la membrane filtrante (3) au-devant de la ou des buses de nettoyage (4) et/ou de décolmatage (6).

6. Dispositif de filtre (1) immergé pour filtrage de l'eau selon les revendications 3 et 5, **caractérisé en ce que** les moyens de commande du déplacement de la membrane filtrante sont constitués par des moyens d'entraînement en rotation du châssis (2) associé à la membrane filtrante (3).

7. Dispositif de filtre (1) immergé pour filtrage de l'eau selon la revendication 5, **caractérisé en ce que** le flux d'eau provenant de la ou des buses de nettoyage (4) est orienté dans la même direction que la vitesse tangentielle au châssis (2).

8. Dispositif de filtre (1) immergé pour filtrage de l'eau selon la revendication 5, **caractérisé en ce que** le flux d'eau provenant de la ou des buses de nettoyage (4) est orienté à contre sens par rapport à la vitesse tangentielle au châssis (2).

9. Dispositif de filtre (1) immergé pour filtrage de l'eau selon l'une des revendications 1 à 8, **caractérisé en ce qu'**il comporte une pluralité de buses (4, 6) réparties sur une ou plusieurs rampes (5, 7).

10. Dispositif de filtre (1) immergé pour filtrage de l'eau selon l'une des revendications 1 à 9, **caractérisé en ce que** 'il comporte les moyens d'alimentation en eau de la ou des buses de nettoyage (4) et/ou de décolmatage (6) sont constitués par une pompe indépendante (P₁).

11. Dispositif de filtre (1) immergé pour filtrage de l'eau selon l'une des revendications 1 à 9, **caractérisé en ce que** 'il comporte les moyens d'alimentation en eau de la ou des buses de nettoyage (4) et/ou de décolmatage (6) sont constitués par la pompe d'aspiration (P) pour la filtration de l'eau.
